# EUROPEAN PATENT SPECIFICATION

(11) **EP 1 452 280 B1**
(45) Date of publication and mention of the grant of the patent: **15.06.2005**
(21) Application number: 02785426.4
(22) Date of filing: 24.10.2002
(51) Int. Cl.: B26B 15/00

(54) **MOTORISED CUTTING TOOL COMPRISING AN AUTOMATED CUTTING DEVICE**
MOTORISIERTES SCHNEIDWERKZEUG MIT EINER AUTOMATISIERTEN SCHNEIDVORRICHTUNG
OUTIL DE COUPE MOTORISE EQUIPE D'UN DISPOSITIF DE COUPE AUTOMATISE

(30) Priority: 25.10.2001 ES 200102610 U
(43) Date of publication of application: 01.09.2004
(73) Proprietor: Hispaes, S.A., 08182 Sant Feliu de Codines (ES)
(72) Inventor: GURRI MOLINS, José, E-08182 Sant Feliu de Codines (ES)
(74) Representative: Gislon, Gabriele
(86) International application number: PCT/ES2002/000504
(87) International publication number: WO 2003/035338

(56) References cited:
- WO-A1-99/42253
- ES-U- 1 006 938
- FR-A1- 2 635 435
- FR-A1- 2 712 837

## Description

### Field of the invention

This invention refers to a motor-powered cutting tool provided with a automated cutting device. Such device activates a closing-opening motion of cutting jaws when a detector detects the presence of an object in the cutting mouth between such jaws.

### Prior art

In prior art a number of motor-powered cutting tools are known essentially comprising a support associated to a power supply from a motor, a cutting mouth formed of two cutting jaws, at least one of them being an operative cutting jaw movingly mounted on such support and connected to the output of such power supply through a kinematic transmission to carry out a closing-opening motion with respect to the other jaw. The support includes or supports a handle on which are located driving means, which generally comprises a push-button for activating such motor, to provoke such closing-opening motion activation and a control associated to a safety device, which as so that the said activation does not occur if the safety control is not in a predetermined operative situation or position, even though such push-button is pressed.

For cutting an object, an operator first locates the object in the area of the tool cutting mouth, that is to say, between the two cutting jaws, and thereafter, it acts on the push-button or push-buttons to carry out the cut. The time elapsed between that two steps, accumulated along a working day constitutes a significant amount of unproductive time. In addition, when an operator is intensively working with one of such cutting tools during long periods of time, he may suffers an effect of fatigue at the hand which is seizing the handle and the fingers of which acts on the driving members, specially because of repeated operating manoeuvres on the push-button or push-buttons.

### Description of the invention

The object of this invention is to overcome the problems of unproductive time and fatigue above mentioned providing a motor-driving cutting tool having an automated cutting device capable to detect the presence of an object to be cut in the cutting mouth and, by virtue of such detection, activating the opening-closing motion of the jaws to automatically cutting such object.

For this, the cutting tool of this invention incorporates a detector provided with a field of action capable to detect the presence of an object in the area of such cutting mouth between the said two cutting jaws. Such detector, when it carries out a detection, releases an activation signal which enables such motor to control the closing-opening motion of the cutting jaws. Preferably, and as safety measure, such activation of the motor is only effective when at least one of the members forming part of such driving means, that is to say, the activation push-button or the safety control, is in operative position, In a most preferred example of embodiment, in order that the motor activation is effective, it is necessary that as well the activation push-button as the safety control are both in operative position.

The said detector can be of a variety of different kind depending on the application and of the kind of objects to be cut and, in general, it will be a contact of closeness.

As a contact detector, an electromechanically operated detector is useful, such as a microswitch, either associated to one of such cutting jaw or directly fixed on the tool support, provided with a lever, feeler or push button which is extended inwardly the cutting mouth. When such lever, feeler or push button is moved by the object to be cut introduced in the mouth of the cutting tool, the microswitch activates the cutting driving motor.

Another kind of useful detector is a closeness detector selected from a group including: inductive detectors, that is to say, which use as working field a magnetic field; capacitive detectors, that is to say, which use as working field an electrical field; and detectors by radiation, which use electromagnetic rations as physical means used for reacting in front of objects to be detected.

A closeness detector of the inductive kind is suitable when the material of the object to be cut is ferromagnetic, although in this case, the cutting jaws would be non-magnetic, for example of titanium, not to produce interferences with the detector. An example of suitable inductive detector is the Hall effect detector, because of its small size and low cost, which can be easily associated to one of the cutting jaws or the support itself in a position close to the cutting mouth.

A detector of closeness of the capacitive kind is suitable when the material of the object to be cut is electroconductive. In this case, the object to be cut can be connected to a very low intensity and high frequency power supply, which does not produce any sensation nor physiologic problem to the operator therefore he may handle the part with its bare hands. However, such low intensity and high frequency current is sufficient to activate the capacitive detector. Also in this case, the detector can be easily associated to one of the cutting jaws or to the tool support itself in a position close to the cutting mouth.

When the material of the object to be cut is opaque, which occurs a great many times, it is suitable to have a closeness detector of light radiation, either on the visible band or infrared. When it is required to act with the cutting tool in well alight ambience, for example with full daylight, it is convenient to use the infrared band detector. In the cutting tool of this invention, it is possible to use two different configurations for the radiation detectors. A first configuration comprises an emitting element associated to one of such cutting jaws and a receiving element associated to the other of the cutting jaws. The second configuration, called retroreflecting comprises a single emitter-receiver associated to one of such cutting jaws or to the tool support itself in a position close to the cutting mouth. For this second configuration, it is necessary that the object to be cut reflects fairly the radiation because the ray released by the emitter-receiver must be reflected on the object to be detected and must come back to the emitter-receiver to be captured. Are also detectors by radiation which can be used for this invention, the detectors by radio-frequency.

When the cutting tool has one moving jaw and the other is fixed, it is preferable that the detector is associated to the fixed jaw for more easily installing the detector connection wiring, although, in general it is most preferred that the detector is mounted on the tool support in a position close to the cutting mouth, generally close to the hinging point of the jaw(s).

Are also well-known in the prior art electronic devices suitable for managing the signal released by the detector in order to activate or de-activate the functions of the motor.

For some applications in which it is wished to use the cutting tool of this invention in a conventional way, that is to say, without using the automated cutting function, a control associated to a device for activating or de-activating such cut automatization device is included. In this case, when the cutting automatization device is de-activated, the cutting tool can be controlled by the said driving means, that is to say, by such activation push-button and such safety control, as it is conventional in the tools of the prior art.

### Short description of the drawings

For a best understanding of the invention, a detailed description is given as an example of embodiment with reference to the drawings attached in which:
Fig. 1 is a side elevation view of the motor-powered cutting tool with the cutting automatization device according to a first example of embodiment of this invention, in which the profile of a shell forming the handle is shown in a broken line;
Fig. 2 is a lower view of the first example of embodiment of the cutting tool of this invention, taken in the direction of the arrow II of Fig. 1; and
Fig. 3 is a side elevation view of a second example of embodiment of the cutting tool with the cut automating device of this invention.

### Detailed description of an example of embodiment

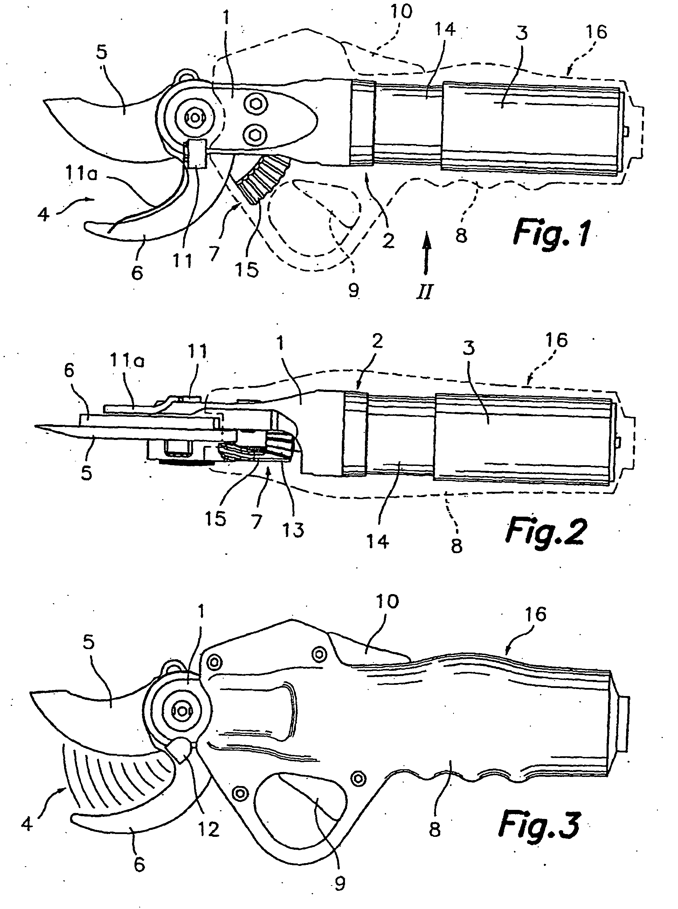

Referring to the figures in general, the cutting tool of this invention comprises a support 1 (best shown in Fig. 1 and 2) associated to a power supply 2 coming from a motor 3, a cutting mouth 4 comprising two cutting jaws 5, 6. In the examples illustrated, one of such jaws is an active jaw, having the shape of a cutting blade 5 mounted mobile on such support 1 and connected to the output of such power supply 2 by means of a kinematic transmission 7 to carry out a closing-opening motion with respect of the other jaw, which is fixed on the support 1 and takes the form of a hawk or a dolly 6. The said transmission includes, in this example, a pinion 13 integral with the output shaft of a reducer 14 associated to the motor 3 which is geared with a crown wheel sector 15 integral with the moving jaw 5. However, the automated cutting device of this invention can be implemented in any other kind of motor-powered portable cutting tool. For example, in a scissor or the like having moving jaws.

The said support 1 integrates or has mounted on it a shell 16 (best shown in Fig. 3), a portion of which constitutes a handle 8 in which are arranged controlling means integrating at least a push button for activating such motor 3 for driving the said closing-opening motion and a control 10 associated to a safety device. The motor 3 is fed through a connection (not shown) from a power supply, for example, one or more re-loadable batteries born by the operator at his girdle. The said handle 8, within the different configurations it can have, has an ergonomic design so that it can be seized by the operator with a single hand and act on the said controlling means 9, 10 with the fingers of such hand.

The automated cutting device incorporated in the cutting tool of this invention essentially comprises a detector 12, 11 provided with a field of action capable of detecting the presence of an object in the area of such cutting mouth 4, more concretely in a preset area between the cutting jaws 5,6 when they are open. When the detector 12, 11 detects an object in that area, it releases an activation signal which enables the said motor 3 to automatically carry out such activation of the closing-opening motion of the cutting jaws 5, 6. A simple conventional electronic device carries out the management of such signal.

For safety purposes, such closing-opening motion of the cutting jaws 5, 6 is not carried out in an unconditional way but preferably such activation of the motor 3 by virtue of that signal from the detector 12, 11 is only effective provided that at least one of the members forming part of the said controlling means, that is to say, activation push button 9 or safety control 10 are in operative position and more preferably only if as well the activation push button 9 as the safety control 10 are both in operative position.

According to a first example of embodiment shown in Fig. 1 and 2, such detector is an electromechanical contact detector comprising at least a microswitch 11 fixed on the support 1 in a position close to the hinge of the jaw 5, at the internal end of the cutting mouth 4. A lever 11a linked to a push button of such microswitch 11 is extending within the cutting mouth 4, out of the path of such cutting jaws 5, 6. As it is shown in Fig. 1, the lever 11a of the microswitch 11 is located along part of the internal outline of the fixed jaw 6 which defines the cutting mouth 4, slightly moved inwardly the same. Also, as it can be seen in Fig. 2, the lever 11a of the microswitch 11 is located by the external side of the fixed jaw 6, opposite to the side corresponding to the moving jaw 5. Thus, any object to be cut which is introduced in the said cutting mouth will move the lever 11 a and this later will press the push button of the microswitch 11 with which it will release a signal for activating the motor 3 which will let release the automatic closing-opening motion of the moving jaw 5 with respect to the fixed jaw 6 without such lever 11a nor the microswitch 11 body interferes in such operation. However, the electromechanical contact detector 11 could also be associated to one of such cutting jaws 5, 6 and, in the event that one of such jaws is fixed, the detector will be preferably associated to such fixed jaw.

The electromechanical contact detector, which is exemplified by the microswitch 11 of Fig. 1 and 2, is useful for an universal application, because it is fit for detecting objects to be cut out of an huge variety of different materials the single necessary property of which is a given physical consistency which most of the materials to be cut generally possess.

Referring now to Fig. 3, the detector is a detector of closeness 12, that is to say, that it does not need to physically contact the object to be cut to detect its presence but that it is sufficient that it is close. This kind of detectors includes inductive detectors, capacitive detectors and detectors by radiation. Selecting the kind of detector of closeness in particular will be done according to the function of the material of the object to be cut and/or the conditions of the environment.

When the material of the object to be cut is ferromagnetic, such detector of closeness can be an inductive detector by Hall effect 12 such as the one shown in Fig. 3. The detector by Hall effect can be associated to one of the cutting jaws 5, 6 although it is preferred that it is fixed on the support 1 itself in a position close to the internal end of the cutting edge 4, as it is shown in such Fig. 3. To prevent interferences with the detector 12 it is convenient that the material of such cutting jaws 5, 6 are non magnetic, such a titanium.

When the material of the object to be cut is electroconductive, such detector 12 can be a capacitive detector of closeness associated to one of the cutting jaws 5, 6 or the support 1 itself in a position close to the cutting mouth 4. The material of the object to be cut can be connected to a very low intensity and high frequency power supply which does not produce any sensation nor physiologic effect on the operator, which can handle it with his bare hands.

When the material of the object to be cut is opaque, such detector 12 can be a closeness detector of light radiation on the visible band or infrared, which comprises an emitting element associated to one of such cutting jaws 5, 6 and a receiving element associated to the other of the cutting jaws 5, 6.

When the material of the object to be cut is reflecting, such detector 12 can be a detector of closeness retroreflecting the light radiation on the visible band or infrared, comprising an emitting-receiving element associated to one of such cutting jaws 5, 6 or the support itself 1 in a position close to the cutting mouth.

As it was described above, the cutting tool shown in Fig. 1 has a moving jaw and a fixed one. In this case, and provided that the detector 12 is associated to a single of the jaws 5, 6 it is preferred that it is the fixed jaw because this would provide an easier installation of the detector connection wiring. However, the detector 12 can be mounted on a cutting tool on which both jaws are mobile, in which case it can be associated to one of such moving jaws or, preferably, fixed on the support.

It can be wished that for some applications, the conventional use, that is to say the non automated use of the cutting tool. For this, and according to a preferred example of embodiment, the cutting tool of this invention comprises a control (not shown) allowing to activate or deactivate such automated cutting device, that is to say, for enabling or disabling the detector 12, 11. When the automated cutting device is de-activated, the cutting tool can be controlled though the said controlling means, that is to say the activation push button 9 and safety control 10, in a conventional way.

A man of the art can easily introduce changes and variations without being beyond the scope of the invention as defined in the claims appended.

## Claims

1. Motor-powered cutting tool provided with a automated cutting device comprising a support (1) associated to a power supply (2) from a motor (3), a cutting mouth (4) comprising two cutting jaws (5, 6), such as a cutting blade (5) and a dolly (6), at least one of which is an active cutting jaw (5) mounted mobile on said support (1) and connected to the output of said power supply (2) by means of a kinematic transmission (7) to carry out a closing-opening motion with respect to the other jaw (6), a handle (8) and controlling means being associated or integrated on said support (1), which comprise at least an activation push button (9) of said motor (3) for driving said closing-opening motion and at least a control (10) associated to a safety device,
said automated cutting device comprises a detector (12) provided with a field of action capable of perceive the presence of an object in the area of said cutting mouth (4) between the said two cutting jaws (5, 6), said detector (12) when carrying out the detection releasing an activation signal which enables said motor (3) in order that the said closing-opening motion of the cutting jaws (5, 6) be performed;
**characterized in that** said detector is a detector of closeness (12) selected from a group which includes inductive detectors, capacitive detectors and detectors by radiation.

2. Cutting tool, according to claim 1, **characterized in that** said control of the motor (3) by virtue of the said signal from the detector (12) is effective provided that at least one of the members forming part of the said controlling means, that is to say the activation push button (9) or the safety control (10) is at a predetermined operative situation or position.

3. Cutting tool, according to claim 2, **characterized in that** the activation of the motor (3) by virtue of the signal from the detector (12) is effective provided that both members forming part of the control means, that is to say said activation push button (9) and said safety control (10) are in said predetermined operative situation or position.

4. Cutting tool, according to claim 1, 2 or 3, **characterized in that** for an object to be cut of ferromagnetic material, said detector of closeness (12) is an inductive detector by Hall effect associated to one of the cutting jaws (5, 6) or the support itself (1) in a position close to the cutting mouth (4) the material of said jaws (5, 6) being non magnetic.

5. Cutting tool, according to claim 1, 2 or 3, **characterized in that** for an object to be cut of electroconductive material, said detector of closeness (12) is a capacitive detector associated to one of the cutting jaws (5, 6) or the support itself (1) in a position close to the cutting mouth (4) such material of the object to be cut being connected to a very low intensity and high frequency power supply.

6. Cutting tool, according to claim 1, 2 or 3 **characterized in that** for an object to be cut of opaque material, said detector of closeness (12) is a detector of light radiation on the visible band or infrared which comprises an emitting element associated to one of said cutting jaws (5, 6) and a receiving element associated to the other of the cutting jaws (5, 6).

7. Cutting tool, according to claim 1, 2 or 3, **characterized in that**, for an object of be cut of reflecting material, said detector of closeness (12) is a retroreflecting detector of light radiation on the visible band or infrared comprising an emitting-receiving element associated to one of said cutting jaws (5, 6) or the support itself (1) in a position close to the cutting mouth.

8. Cutting tool, according to claim 1, 2 or 3, **characterized in that** it comprises a control for activating or deactivating said automated cutting device the cutting tool being able to be driven when the automated cutting device is deactivated, by the said controlling means, that is to say, by said activation push button (9) and said safety control (10), in a conventional way.

## Patentansprüche

1. Motorschneidwerkzeug mit automatisierter Schneidvorrichtung, die folgendes umfasst: eine Halterung (1), die an eine Spannungsversorgung (2) von einem Motor (3) angeschlossen ist, eine Schneidöffnung (4) mit zwei Schneidbacken (5, 6), wie z.B. einer Schneide (5) und einem Gegenhalter (6), von denen mindestens eine eine an der Halterung (1) beweglich gelagerte und mit der Spannungsversorgung (2) mittels eines kinematischen Getriebes (7) verbundene aktive Schneidbacke (5) ist, wodurch bezüglich der anderen Backe (6) eine Schließ-Öffnungsbewegung ausgeführt wird, einen Griff (8) sowie Steuermittel, die mit der Halterung (1) verbunden oder darin integriert sind und mindestens einen Schalttaster (9) des Motors (3) zum Antrieb der Schließ-Öffnungsbewegung sowie mindestens einen mit einer Sicherheitsvorrichtung verbundenen Regler (10) aufweisen,
wobei die automatisierte Schneidvorrichtung einen Detektor (12) aufweist, der mit einem Aktionsfeld versehen ist, das zur Erfassung der Präsenz eines Gegenstandes im Bereich der Schneidöffnung (4) zwischen den beiden Schneidbacken (5, 6) befähigt ist, wobei der Detektor (12) bei der Erfassung ein Schaltsignal zur Freischaltung des Motors (3) ausgibt, damit die Schließ-Öffnungsbewegung der Schneidbacken (5, 6) durchgeführt werden kann;
**dadurch gekennzeichnet, dass** es sich bei dem Detektor um einen Näherungsdetektor (12) handelt, der ausgewählt ist aus der Gruppe der induktiven Detektoren, kapazitiven Detektoren und Strahlungsdetektoren handelt.

2. Schneidwerkzeug nach Anspruch 1, **dadurch gekennzeichnet, dass** die Steuerung des Motors (3) mittels des Signals vom Detektor (12) dann wirksam ist, wenn sich mindestens eines der einen Teil der Steuermittel bildenden Glieder, d.h. der Schalttaster (9) oder der Sicherheitsregler (10), in einer vorgegebenen Arbeitsstellung befindet.

3. Schneidwerkzeug nach Anspruch 2, **dadurch gekennzeichnet, dass** die Freischaltung des Motors (3) mittels des Signals vom Detektor (12) dann wirksam ist, wenn sich beide einen Teil der Steuermittel bildende Glieder, d.h. der Schalttaster (9) und der Sicherheitsregler (10), in der vorgegebenen Arbeitsstellung befinden.

4. Schneidwerkzeug nach Anspruch 1, 2 oder 3, **dadurch gekennzeichnet, dass** es sich bei einem zu schneidenden Gegenstand aus ferromagnetischem Material bei dem Näherungsdetektor (12) um einen auf dem Hall-Effekt beruhenden induktiven Detektor handelt, der mit einer der Schneidbacken (5, 6) oder der Halterung (1) selbst in einer Stellung nahe der Schneidöffnung (4) verbunden ist, wobei das Material der Backen (5, 6) nichtmagnetisch ist.

5. Schneidwerkzeug nach Anspruch 1, 2 oder 3, **dadurch gekennzeichnet, dass** es sich bei einem zu schneidenden Gegenstand aus elektrisch leitendem Material bei dem Näherungsdetektor (12) um einen kapazitiven Detektor handelt, der mit einer der Schneidbacken (5, 6) oder der Halterung (1) selbst in einer Stellung nahe der Schneidöffnung (4) verbunden ist, wobei das Material des zu schneidenden Gegenstands an eine Hochfrequenzspannungsversorgung mit sehr niedriger Stromstärke angeschlossen ist.

6. Schneidwerkzeug nach Anspruch 1, 2 oder 3, **dadurch gekennzeichnet, dass** es sich bei einem zu schneidenden Gegenstand aus lichtundurchlässigem Material bei dem Näherungsdetektor (12) um einen Lichtstrahldetektor des sichtbaren oder Infrarotspektrums handelt, der ein Sendeelement, das mit einer der Schneidbacken (5, 6) verbunden ist, und ein Empfangselement, das mit der anderen der Schneidbacken (5, 6) verbunden ist, aufweist.

7. Schneidwerkzeug nach Anspruch 1, 2 oder 3, **dadurch gekennzeichnet, dass** es sich bei einem zu schneidenden Gegenstand aus reflektierendem Material bei dem Näherungsdetektor (12) um einen Rückstrahldetektor des sichtbaren oder Infrarotspektrums handelt, der ein Sende- und Empfangselement, das mit einer der Schneidbacken (5, 6) oder der Halterung (1) selbst in einer Stellung nahe der Schneidöffnung verbunden ist, aufweist.

8. Schneidwerkzeug nach Anspruch 1, 2 oder 3, **dadurch gekennzeichnet, dass** es einen Regler zum Ein- bzw. Ausschalten der automatisierten Schneidvorrichtung aufweist, wobei das Schneidwerkzeug bei ausgeschalteter automatisierter Schneidvorrichtung durch die Steuermittel, d.h. den Schalttaster (9) und den Sicherheitsregler (10), in herkömmlicher Weise angetrieben werden kann.

## Revendications

1. Tronçonneuse pourvue d'un dispositif de coupe automatique comportant un support (1) associé à une alimentation de courant (2) provenant d'un moteur (3), une ouverture de coupe (4) comportant deux mâchoires tranchantes (5, 6), telle qu'une lame tranchante (5) et une contre-bouterolle (6), dont au moins un d'eux est une mâchoire tranchante de travail (5) montée mobile sur ce support (1) et reliée à la sortie de cette alimentation de courant (2) au moyen d'une transmission cinématique (7) pour effectuer un mouvement de fermeture-ouverture par rapport à l'autre mâchoire (6), une poignée (8) et des moyens de contrôle étant associés ou intégrés à ce support (1), comprenant au moins un poussoir d'activation (9) de ce moteur (3) pour entraîner ce mouvement de fermeture-ouverture et au moins un contrôle (10) associé à un dispositif de sûreté
ce dispositif de coupe automatique comporte un détecteur (12) pourvu d'un domaine d'action capable de percevoir la présence d'un objet dans la région de cette ouverture de coupe (4) entre ces deux mâchoires tranchantes (5, 6) ce détecteur (12) lorsqu'il effectue la détection déclenchant un signal d'activation qui met ce moteur (3) en circuit afin que ce mouvement de fermeture-ouverture des mâchoires tranchantes (5, 6) soit effectué;
**caractérisé en ce que** ce détecteur est un détecteur de proximité (12) choisi d'un groupe comprenant des détecteurs de déplacement inductif, des détecteurs capacitifs et des détecteurs par radiation.

2. Tronçonneuse conformément à la revendication 1, **caractérisée en ce que** le contrôle du moteur (3) est effectué grâce à ce signal du détecteur (12) à condition qu'au moins un des membres formant part de ces moyens de contrôle, c'est-à-dire, le poussoir d'activation (9) ou le contrôle de sûreté (10) se trouve dans une situation ou à une position de travail prédéterminée.

3. Tronçonneuse, conformément à la revendication 2, **caractérisée en ce que** l'activation du moteur (3) est effectuée grâce au signal du détecteur (12) à condition que les deux membres faisant partie des moyens de contrôle, c'est-à-dire ce poussoir d'activation (9) et ce contrôle de sûreté (10) se trouve dans cette situation ou à cette position de travail prédéterminée.

4. Tronçonneuse, conformément à la revendication 1, 2 ou 3, **caractérisée en ce que** pour un objet à être découpé dans un matériau ferromagnétique, ce détecteur de proximité (12) est un détecteur de déplacement inductif par l'effet Hall relié à une des mâchoires tranchantes (5, 6) ou au propre support (1) dans une position proche de la mâchoire tranchante (4) le matériau de ces mâchoires (5, 6) étant non magnétique.

5. Tronçonneuse, conformément à la revendication 1, 2 ou 3, **caractérisée en ce que** pour un objet à découper dans un matériau conducteur d'électricité, ce détecteur de proximité (12) est un détecteur capacitif relié à une des mâchoires tranchantes (5, 6) ou au propre support (1) dans une position proche de la mâchoire tranchante (4), ce matériau de l'objet à découper étant connecté à une alimentation de courant à très faible intensité et à haute fréquence.

6. Tronçonneuse, conformément à la revendication 1, 2 ou 3, **caractérisée en ce que** pour un objet à découper dans un matériau opaque, ce détecteur de proximité (12) est un détecteur de radiation lumineuse sur la bande visible ou infrarouge comportant un élément émetteur relié à une de ces mâchoires tranchantes (5, 6) et un élément récepteur relié à l'autre de ces mâchoires tranchantes (5, 6).

7. Tronçonneuse, conformément à la revendication 1, 2 ou 3, **caractérisée en ce que** pour un objet à découper dans un matériau réfléchissant, ce détecteur de proximité (12) est un détecteur rétro réfléchissant de la radiation lumineuse sur la bande visible ou infrarouge comportant un élément émetteur-récepteur relié à une de ces mâchoires tranchantes (5, 6) ou au propre support (1) dans une position proche de la mâchoire tranchante.

8. Tronçonneuse, conformément à la revendication 1,2 ou 3, **caractérisée en ce qu'**elle comporte un contrôle pour activer ou désactiver ce dispositif de coupe automatique, la tronçonneuse pouvant être entraînée lorsque le dispositif de coupe automatique est désactivé, par ces moyens de contrôle, c'est-à-dire, par ce poussoir d'activation (9) et ce contrôle de sûreté (10), de façon conventionnelle.
